(19) Europäisches Patentamt
European Patent Office
Office européen des brevets

(11) Veröffentlichungsnummer: **0 055 842**
**A2**

(12) # EUROPÄISCHE PATENTANMELDUNG

(21) Anmeldenummer: **81110631.9**

(22) Anmeldetag: **21.12.81**

(51) Int. Cl.³: **C 09 K 3/34**
//C09B31/062, C09B1/00

(30) Priorität: **30.12.80 DE 3049453**

(43) Veröffentlichungstag der Anmeldung:
**14.07.82 Patentblatt 82/28**

(84) Benannte Vertragsstaaten:
**CH DE FR GB IT LI**

(71) Anmelder: **BAYER AG**
**Zentralbereich Patente, Marken und Lizenzen**
**D-5090 Leverkusen 1, Bayerwerk(DE)**

(72) Erfinder: **Claussen, Uwe, Dr.**
**Carl-Rumpff-Strasse 29**
**D-5090 Leverkusen 1(DE)**

(72) Erfinder: **Bernhardt, Jörg, Dr.**
**Annette-Kolb-Anger 3**
**D-8000 München 83(DE)**

(72) Erfinder: **Krüger, Hans, Dipl.-Phys.**
**Peralohstrasse 13**
**D-8000 München 83(DE)**

(54) **Farbstoffgemische und flüssigkristalline Materialien enthaltend diese Farbstoffgemische.**

(57) 1. Farbstoffgemische enthaltend
A) mindestens einen Azofarbstoff der Formel

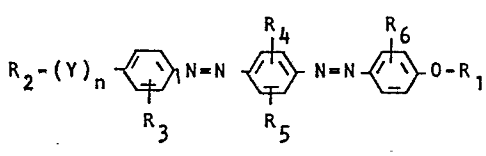 (1)

in der

$R_1$ Alkyl, Aralkyl, Cycloalkyl, Aryl, Alkylsulfonyl, Aralkylsulfonyl, Cycloalkylsulfonyl, Arylsulfonyl, Acyl oder eine Gruppe R–NH–CO– oder R–O–CO–, bei der R für Alkyl, Aralkyl, Cycloalkyl, Aryl steht, wobei die genannten Kohlenwasserstoffreste substituiert sein können,

n 0 oder 1 ist

Y –O– bezeichnet und

$R_2$ für n=1 die oben angegebenen Bedeutungen für $R_1$ hat
und
für n=0 Wasserstoff ist,

$R_3$, $R_4$, $R_5$, $R_6$ Wasserstoff, gegebenenfalls substituiertes Alkyl, Alkoxy, Halogen oder Cyan bezeichnen, und

B) mindestens einen Anthrachinonfarbstoff der Formel

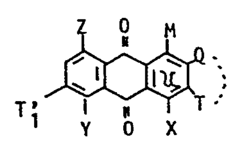 (11)

in der

M OH oder $NHR_1$ und

X, Y, Z, H, OH oder $NHR_1$ bezeichnen, wobei

$R_1$ für H, Alkyl, Cycloalkyl, Aryl oder Aralkyl stehen und die für $R_1$ genannten Kohlenwasserstoffreste substituiert sein können,

Q einen Aryl- oder heterocyclischen Rest oder einen über ein O oder -Atom mit Ring U verbundenen aliphatischen, cycloaliphatischen, araliphatischen, Aryl- oder heterocyclischen Rest oder ein über ein O oder S-Atom mit Ring U verbundenes cycloaliphatisches, Aryl-, oder heterocyclisches Ringsystem, wobei die genannten Reste und Ringsysteme substituiert sein können, oder eine Gruppe

$$-L{=}A{-}R_2,\quad -\underset{\underset{O}{\|}}{C}-G-R_2 \quad \text{oder} \quad -SO_2-(O)_n-R_6$$

./...

EP 0 055 842 A2

bezeichnet, wobei

A, L N oder CH

G $CH_2$, O oder $NR_1$ und

$R_2$ Alkyl, Cycloalkyl, Aralkyl, Aryl oder einen heterocyclischen Rest, wobei die für $R_2$ genannten Reste substituiert sein können und

$R_6$ einen aliphatischen, araliphatischen, cycloaliphatischen, Aryl- oder heterocyclischen Rest oder ein cycloaliphatisches, Aryl- oder heterocyclisches Ringsystem, wobei die für $R_6$ gennanten Reste und Ringsysteme substituiert sein können und

n 0 oder 1 bezeichnen;

T Wasserstoff oder Q bezeichnet;

T Q eine Gruppierung 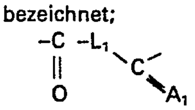

wobei

$L_1$ für O oder $NR_3$,

$R_3$ für einen aliphatischen, cycloaliphatischen oder araliphatischen Rest, wobei die für $R_3$ genannten Reste substituiert sein können und

$A_1$ für O oder NH stehen, bezeichnet und

$T_1'$ für Wasserstoff oder Q steht,

sowie flüssigkristallines Material enthaltend diese Farbstoffgemische.

0055842

BAYER AKTIENGESELLSCHAFT 5090 Leverkusen, Bayerwerk
Zentralbereich PG/schl-
Patente, Marken und Lizenzen
Siemens Aktiengesellschaft 8000 München, Mittelsbacherplatz 2

Farbstoffgemische und flüssigkristalline Materialien ent= haltend diese Farbstoffgemische

Die Erfindung betrifft Farbstoffgemische aus einem Azo- und einem Anthrachinonfarbstoff und ihre Verwendung in flüssigkristallinen Materialien. Die flüssigkristallinen Materialien finden Verwendung in Displays.
Beispielsweise sind zur Herstellung von schwarz-weiß an= zeigenden Displays flüssigkristalline Materialien erfor= derlich, die Farbstoffmischungen aus einem blauen, einem gelben und einem roten Farbstoff enthalten.
Unter Displays werden hier opto-elektronische Anzeigeele= mente verstanden, die in der Regel aus 2 parallelen im Abstande von 5-50 μ angeordneten Platten bestehen, von de= nen wenigstens eine aus lichtdurchlässigem Material her= gestellt ist. An den Innenseiten der Platten werden Elek= troden angebracht, der Raum zwischen ihnen mit dem farb= stoffhaltigen flüssigkristallinen Material gefüllt. Der Aufbau und die Herstellung der optoelektronischen Anzeige ist bekannt (Kelker, Hatz Handbook of Liquid Crystals (1980) S. 611 ff). Ebenfalls ist bekannt, daß man in das flüssig-kristalline Material ausgesuchte Farbstoffe ein= betten kann, die den vom äußeren Feld bewirkten Richtungs- und Ordnungsänderungen des flüssig-kristallinen Materials folgen (sog. guest-host-Wechselwirkung). Diese besondere

Eigenschaft macht geeignete Farbstoffe selten, wenn man neben den genannten dichroitischen Eigenschaften zusätz= lich Echtheiten verlangt, die eine technische Nutzung des Effekts ermöglichen. Wichtige Voraussetzungen hierfür sind die Lichtechtheit, eine ausreichende Löslichkeit und die Verträglichkeit mit anderen Farbstoffen.
In der Literatur sind zahlreiche Einzelfarbstoffe zur Verwendung in flüssigkristallinen Materialien beschrie= ben, so in der DE-OS 26 27 215, DE-OS 29 20 730, DE-OS 29 03 095. Bei einer Farbstoffmischung, wie sie zur Her= stellung einer schwarzen Anzeige in aller Regel notwendig ist, müssen Ordnungsgrad, Lichtechtheit und Löslichkeit übereinstimmen. Besonders bei Azofarbstoffen ist die Lichtechtheit eine kritische Größe [J. Constant et al.; J. Phys. D: Appl. Phys. 11, 485-487 (1978)]. Hinzu kommt, daß die Lichtechtheit von Farbstoffmischungen problema= tisch ist, insbesondere bei der Herstellung von Grüntönen durch Mischen eines gelben und eines blauen Farbstoffs.
Unter dem Begriff des "catalytic-fading" ist die gegensei= tige, negative Beeinflussung zweier an sich lichtechter Farbstoffe bekannt, die als "Blau"- oder "Gelbfraß" zu erheblich beschleunigtem Abbau entweder des blauen oder des gelben Farbstoffs führt. Diese Erscheinung ist bei Mischungen von Azo- und Anthrachinonfarbstoffen besonders häufig (Kramer und Rambold; J. Soc.Dyers Col. 1978, S. 12 - 17).
Wir haben nun überraschend gefunden, daß Gemische ent= haltend

A) mindestens einen Azofarbstoff der Formel

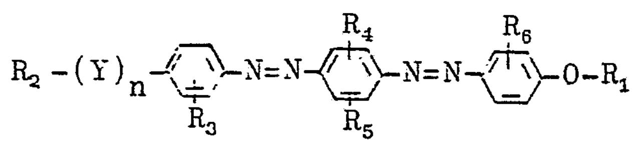

(I)

in der

$R_1$ Alkyl, Aralkyl, Cycloalkyl, Aryl, Alkylsulfonyl, Aralkylsulfonyl, Cycloalkylsulfonyl, Arylsulfonyl, Acyl oder eine Gruppe R-NH-CO- oder R-O-CO-, bei der R für Alkyl, Aralkyl, Cycloalkyl, Aryl steht, wobei die genannten Kohlenwasserstoffreste substituiert sein können,

n 0 oder 1 ist,

Y -O- bezeichnet und

$R_2$ für n=1 die oben angegebenen Bedeutungen für $R_1$ hat und für n=0 Wasserstoff ist,

$R_3$, $R_4$, $R_5$, $R_6$ Wasserstoff, gegebenenfalls substituiertes Alkyl, Alkoxy, Halogen oder Cyan bezeichnen

und

B) mindestens eine Anthrachinonfarbstoff der Formel

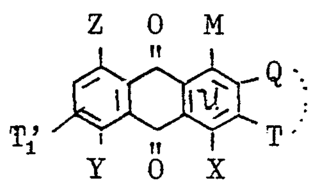

(II)

in der

M OH oder $NHR_1$ und

X, Y, Z H, OH oder $NHR_1$ bezeichnen, wobei

$R_1$ für H, Alkyl, Cycloalkyl, Aryl oder Aralkyl stehen und die für $R_1$ genannten Kohlenwasserstoffreste substituiert sein können,

Q einen Aryl- oder heterocyclischen Rest oder einen über ein O- oder S-Atom mit Ring U verbundenen ali=phatischen, cycloaliphatischen, araliphatischen, Aryl- oder heterocyclischen Rest oder ein über ein O- oder S-Atom mit Ring U verbundenes cycloalipha=tisches, Aryl- oder heterocyclisches Ringsystem, wobei die genannten Reste und Ringsysteme substitu=iert sein können, oder eine Gruppe

$-L{=}A{-}R_2$, $-\underset{\underset{O}{\|}}{C}-G-R_2$ oder $-SO_2-(O)_n-R_6$

bezeichnet, wobei

A, L N oder CH

G $CH_2$, O oder $NR_1$ und

$R_2$ Alkyl, Cycloalkyl, Aralkyl, Aryl oder einen heterocyclischen Rest, wobei die für $R_2$ genannten Reste substituiert sein können und

$R_6$ einen aliphatischen, araliphatischen, cycloaliphatischen, Aryl- oder heterocyclischen Rest oder ein cycloaliphatisches, Aryl- oder heterocyclisches Ringssystem, wobei die für $R_6$ genannten Reste und Ringsysteme substituiert sein können und

n 0 oder 1 bezeichnen;

T Wasserstoff oder Q bezeichnet;

T Q eine Gruppierung 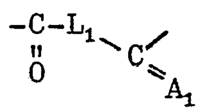

wobei

$L_1$ für O oder $NR_3$,

$R_3$ für einen aliphatischen, cycloaliphatischen oder araliphatischen Rest, wobei die für $R_3$ genannten Reste substituiert sein können und

$A_1$ für O oder NH stehen, bezeichnet und

$T_1'$ für Wasserstoff oder Q steht,

hervorragend lichtechte Mischungen liefern, bei denen die Gelbkomponente der allg. Formel I in ihrer Lichtechtheit durch die Anwesenheit der anderen Komponente angehoben wird. Die Lichtechtheit der Mischung ist mithin größer als die der relativ lichtunechtesten Einzelkomponente.

$R_1$ und $R_2$ (für n=1) in Formel I bezeichnen bevorzugt $C_1$-$C_8$-Alkyl, Benzyl, Phenethyl, $C_3$-$C_7$-Cycloalkyl, Phenyl, Naphthyl, $C_1$-$C_6$-Alkylsulfonyl, Benzylsulfonyl, Phenethylsulfonyl, $C_3$-$C_7$-Cycloalkylsulfonyl, Phenylsulfonyl, Naphthylsulfonyl, ($C_1$-$C_8$-Alkyl)-carbonyl, Benzylcarbonyl, Phenethylcarbonyl, ($C_3$-$C_7$-Cycloalkyl)-carbonyl, Benzoyl, Naphthoyl oder eine Gruppe R'-NH-CO- oder R'-O-CO-, bei der R' für $C_1$-$C_8$-Alkyl, Benzyl, Phenethyl, $C_3$-$C_7$-Cycloalkyl, Phenyl oder Naphthyl steht und die für $R_1$ und $R_2$

genannten Reste substituiert sein können, $R_3$, $R_4$, $R_5$, $R_6$ bezeichnen bevorzugt Wasserstoff, gegebenenfalls substi= tuiertes $C_1$-$C_8$-Alkyl, $C_1$-$C_8$-Alkoxy, Fluor, Chlor, Brom oder Cyan.

Bevorzugte Verwendung finden weiterhin Farbstoffe der Formel (I), bei denen $R_1$ und $R_2$ (für n=1) für $C_1$-$C_8$-Alkyl, Benzyl, das durch Fluor, Chlor, Brom, $C_1$-$C_4$-Alkyl, Tri= fluormethyl, $C_1$-$C_8$-Alkoxy, Nitro, Cyan, Amino und gege= benenfalls durch $C_1$-$C_8$-Alkyl oder Phenyl mono- oder di= substituiertes Amino substituiert sein kann, Phenyl, das durch Fluor, Chlor, Brom, $C_1$-$C_8$-Alkyl, Trifluormethyl, $C_1$-$C_8$-Alkoxy, Nitro, Cyan, Amino und gegebenenfalls durch $C_1$-$C_8$-Alkyl oder Phenyl mono- oder disubstituiertes Amino substituiert sein kann, $C_1$-$C_8$-Alkylsulfonyl oder eine Gruppe R-NH-CO- oder R-O-CO- steht, bei der R $C_1$-$C_8$-Alkyl, Cyclohexyl oder Phenyl bezeichnet oder $R_2$ (für n=0) für Wasserstoff steht.

Bevorzugt sind weiterhin Farbstoffe gemäß Formel I, in der $R_3$, $R_4$, $R_5$ für Wasserstoff, $C_1$-$C_4$-Alkyl oder $C_1$-$C_4$-Alkoxy stehen.

Besonders bevorzugt sind Verbindungen der Formel I, in der $R_1$ und $R_2$ voneinander verschieden sind und einer die= ser Reste für Benzyl, das durch Fluor, Chlor, Brom, $C_1$-$C_8$-Alkyl, Trifluormethyl, $C_1$-$C_8$-Alkoxy, Nitro, Cyan, Ami= no und gegebenenfalls durch $C_1$-$C_8$-Alkyl oder Phenyl mono- oder disubstituiertes Amino substituiert sein kann, steht.

Als Blaukomponente kommen vorzugsweise Verbindungen der Formel III in Betracht,

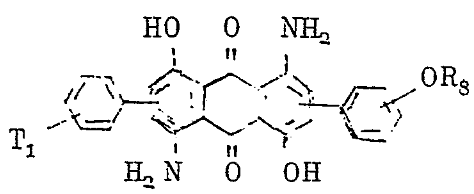

(III)

wobei

$R_8$ Wasserstoff, Acyl einen aliphatischen, cycloalipha=

tischen, araliphatischen, Aryl- oder heterocyclischen Rest bezeichnet, wobei die für $R_8$ genannten Reste substituiert sein können und

$T_1$ H oder den Rest 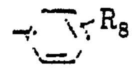 bedeutet, sowie Verbindungen der allgemeinen Formel IV:

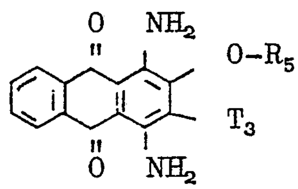

(IV)

in der

$R_5$ für einen Alkyl, Cycloalkyl, Aralkyl, Aryl oder einen heterocyclischen Rest steht, wobei die genannten Reste substituiert sein können und

$T_3$ H oder $OR_5$ bezeichnet.

Als Rotkomponente werden Verbindungen der allgemeinen Formel V bevorzugt.

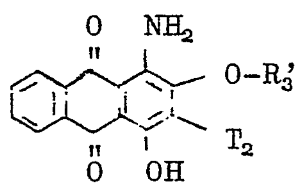

(V)

in der

$R_3'$ für einen aliphatischen, cycloaliphatischen, araliphatischen Rest oder einen Arylrest steht, wobei diese Reste substituiert sein können,

$T_2$ Wasserstoff oder $OR_3'$ bezeichnet.

Die erfindungsgemäßen Farbstoffe sind bekannt oder lassen sich nach bekannten Verfahren herstellen.

Die einzelnen Substituenten zu den Formeln (II)-(V) haben beispielsweise folgende Bedeutungen:

$R_1$ : Wasserstoff, $C_1$-$C_6$-Alkyl, $C_3$-$C_7$-Cycloalkyl, Phenyl,

Naphthyl, Benzyl, Phenethyl;

Q: Phenyl oder Thienyl, die z. B. durch Hydroxy, Halogen vorzugsweise Chlor, $C_1$-$C_4$-Alkyl, Phenoxy, $C_1$-$C_4$-Alkoxy, das seinerseits wieder durch $C_1$-$C_4$-Alkoxy oder Halogen vorzugsweise Chlor, substituiert sein kann, $C_1$-$C_4$-Alkylthio, das seinerseits wieder durch $C_1$-$C_4$-Alkoxy oder Halogen vorzugsweise Chlor, substituiert sein kann, ($C_1$-$C_4$-Alkyl)-carbonyloxy, Benzoyloxy, Benzylcarbonyloxy, Phenyl und Benzyl substituiert sein können; oder einen über ein O-, oder S-Atom mit Ring U verbundenen $C_1$-$C_6$-Alkylrest, der beispielsweise durch $C_1$-$C_4$-Alkoxy, Hydroxy, Phenoxy oder Halogen vorzugsweise Chlor, substituiert sein kann; oder einen über ein O-, oder S-Atom mit Ring U verbundenen $C_3$-$C_7$-Cycloalkylrest; oder einen über ein O-, oder S-Atom mit Ring U verbundenen Benzyl- oder Phenethylrest; oder einen über ein O-, S- oder N-Atom mit Ring U verbundenen Phenyl- oder Naphthylrest, wobei diese Reste beispielsweise durch $C_1$-$C_4$-Alkyl, $C_1$-$C_4$-Alkoxy, $C_1$-$C_4$-Alkylthio, Halogen vorzugsweise Chlor und Brom, Phenyl, Cyclohexyl und Cyan substituiert sein können.

$R_2$, $R_6$: $C_1$-$C_6$-Alkyl, das z. B. durch $C_1$-$C_4$-Alkoxy, Hydroxy, Phenoxy, Halogen vorzugsweise Chlor oder Brom substituiert sein kann; Phenyl, das durch Halogen vorzugsweise Chlor und Brom, $C_1$-$C_4$-Alkyl, $C_1$-$C_4$-Alkoxy, $C_1$-$C_4$-Alkylthio, $NO_2$, CN, $CF_3$, $C_1$-$C_4$-Alkylamino, $C_1$-$C_4$-Dialkylamino substituiert sein kann; $C_3$-$C_7$-Cycloalkyl vorzugsweise Cyclohexyl; Benzyl, Phenethyl; einen 5- oder 6-gliedrigen, ein bis drei Heteroatome aus der Reihe O, N, S enthaltenden, heterocyclischen Ring, der beispielsweise durch $C_1$-$C_4$-Alkyl oder Phenyl substituiert sein kann und an den Benzolring ankondensiert sein kann;

$R_3$: $C_1$-$C_6$-Alkyl, das beispielsweise durch $C_1$-$C_4$-Alkoxy oder Phenoxy substituiert sein kann, $C_2$-$C_6$-Alkenyl, $C_3$-$C_7$-Cycloalkyl, Ar-$C_1$-$C_4$-alkyl.

$T_1'$, T: Wasserstoff, Phenyl und Thienyl, die z. B. durch Hydroxy, Halogen vorzugsweise Chlor, $C_1$-$C_4$-Alkyl, Phenoxy, $C_1$-$C_4$-Alkoxy, das seinerseits wieder durch $C_1$-$C_4$-Alkoxy oder Halogen vorzugsweise Chlor substi= tuiert sein kann, $C_1$-$C_4$-Alkylthio, das seinerseits wieder durch $C_1$-$C_4$-Alkoxy oder Halogen vorzugsweise Chlor substituiert sein kann, ($C_1$-$C_4$-Alkyl)-carbonyl= oxy, Benzoyloxy, Benzylcarbonyloxy, Phenyl und Benzyl substituiert sein können.

$R_5$, $R_3'$: $C_1$-$C_6$-Alkyl, das z. B. durch $C_1$-$C_4$-Alkoxy, Hydroxy, Phenoxy oder Halogen vorzugsweise Chlor substituiert sein kann; $C_3$-$C_7$-Cycloalkyl; Benzyl, Phenethyl; Phenyl, Naphthyl, die beispielsweise durch $C_1$-$C_4$-Alkyl, $C_1$-$C_4$-Alkoxy, $C_1$-$C_4$-Alkylthio, Halogen vorzugsweise Chlor und Brom, Phenyl, Cyclo= hexyl und Cyan substituiert sein können.

$R_8$: $C_1$-$C_6$-Alkyl, das beispielsweise durch Hydroxy, $C_1$-$C_4$-Alkoxy, Halogen vorzugsweise Chlor und Brom substituiert sein kann; ($C_1$-$C_6$-Alkyl)-carbonyl, das z. B. durch $C_1$-$C_4$-Alkoxy substituiert sein kann; $C_3$-$C_7$-Cycloalkyl; Benzyl, Phenethyl.

Bevorzugt sind Farbstoffmischungen, die einen Farbstoff der Formel

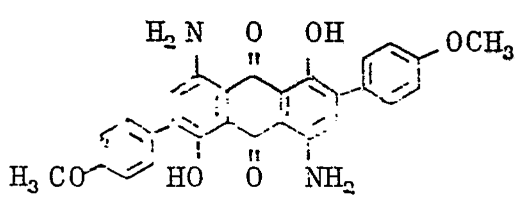

und einen Farbstoff der Formel

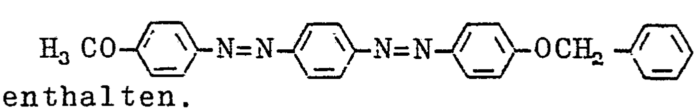

enthalten.

Weiterhin bevorzugt sind Schwarzmischungen aus mindestens einem gelben Farbstoff der Formel I sowie mindestens ei= nem blauen und mindestens einem roten Farbstoff der For= mel II.

Die neuen Farbstoffmischungen enthalten, bezogen auf das Gesamtgewicht an Azo- und Anthrachinonfarbstoff, 0,05 bis 99 Gew.-%, bevorzugt 0,1 bis 50 Gew.-%, besonders bevor= zugt 5-30 Gew.-% mindestens eines Azofarbstoffs gemäß Formel I und 99,95 bis 1 Gew.-%, bevorzugt 99,9 bis 50 Gew.-%, besonders bevorzugt 95-70 Gew.-% mindestens eines Anthrachinonfarbstoffs gemäß Formel II.

Die erfindungsgemäßen Farbstoffmischungen werden gelöst im flüssigkristallinen Material verwendet. Das flüssig= kristalline Material enthält das Farbstoffgemisch vor= zugsweise zu etwa 0,01 bis etwa 30 Gew.-%, besonders be= vorzugt zu etwa 0,5 bis etwa 5 Gew.-%.

Als flüssigkristalline Materialien kommen besonders sol= che positiver dielektrische Ansotropie in Betracht. Bei= spielsweise seien genannt Mischungen von 4(4-Cyanophenyl)-alkylcyclohexanen mit 4(4'-Cyanobiphenyl)alkylcyclo= hexanen oder von 4(4'-Cyanobiphenyl)alkyl-Verbindungen mit 4(4'-Cyanobiphenyl)-alkoxy-Verbindungen und 4-Cyanotriphenylalkyl-Verbindungen. Weiterhin sind Mischungen vorteilhaft die 4-Cyanophenyl-pyrimidine enthalten.

Beispiel 1

In einem flüssigkristallinen Material, bestehend aus 25 % 4(4-Cyano-phenyl)n-propylcyclohexan, 37 % 4(4-Cyano-phenyl)-n-phenyl-cyclohexan, 25 % 4(4-Cyano-phenyl)-n-heptylcyclohexan und 12 % 4(4-Cyano-biphenyl)-n-pentyl= cyclohexan werden gelöst 573 mg/l 1,4-Diamino-5,8-di= hydroxy-3,7-di-p-anisidylanthrachinon, 308 mg/l 1 Amino-4-Hydroxy-2-phenoxy-anthrachinon und 270 mg/l 4 Methoxy-4'-benzyloxy-disazobenzol.

Beim Belichten einer 24 μ dicken Schicht in einem Xeno= testgerät (Hanau) ändert sich in 100 h die Transmission

im kurzwelligen Bereich des sichtbaren Spektrums nur un= wesentlich, während der Azofarbstoff allein unter glei= chen Bedingungen behandelt, eine erhebliche Verminderung seiner Absorption erfährt.

Beispiele 2 - 4

Ähnliche Ergebnisse erhält man, wenn man 250 mg/l 4(4-Methoxy-phenylazo)-3 methoxy-4'-benzyloxyazobenzol,
154 mg/l 1-Amino-4-hydroxy-2 phenoxyanthrachinon und
572 mg/l 1,4-Diamino-5,8-dihydroxy-3,7-di-p anisidyl= anthrachinon, oder

377 mg 1-Amino-2-phenoxy-4-(4'methyl-aminophenyl)-anthra= chinon
52 mg 4-Phenylazo-4'-(N-Cyclohexyl,N'-oxyethyl)aminoazo= benzol und
417 mg 4(4-Methoxy-phenylazo)-3-methoxy-4'- benzyloxy azobenzol oder
540 mg 4(4-Methoxy-phenylazo)-4'benzyloxy azobenzol und
60 mg 1-Amino-2-pehnoxy-4-Hydroxy anthrachinon und
382 mg 1-Amino-2-phenoxy-4-(4'methyl-aminophenyl)-anthra= chinonen

anstelle der in Beispiel 1 genannten Farbstoffe bzw. Farbstoffmengen einsetzt.

## Patentansprüche

1. Farbstoffgemische enthaltend

A) mindestens einen Azofarbstoff der Formel

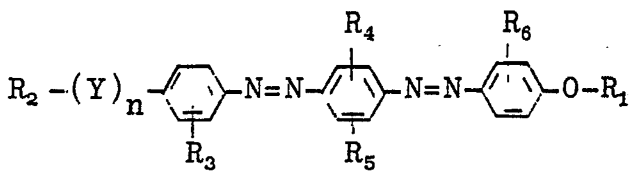

(I)

in der

$R_1$ Alkyl, Aralkyl, Cycloalkyl, Aryl, Alkylsulfonyl, Aralkylsulfonyl, Cycloalkylsulfonyl, Arylsulfonyl, Acyl oder eine Gruppe R-NH-CO- oder R-O-CO-, bei der R für Alkyl, Aralkyl, Cycloalkyl, Aryl steht, wobei die genannten Kohlenwasserstoff=reste substituiert sein können,

n 0 oder 1 ist,

Y -O- bezeichnet und

$R_2$ für n=1 die oben angegebenen Bedeutungen für $R_1$ hat und für n=0 Wasserstoff ist,

$R_3$, $R_4$, $R_5$, $R_6$ Wasserstoff, gegebenenfalls substituier=tes Alkyl, Alkoxy, Halogen oder Cyan bezeichnen, und

B) mindestens einen Anthrachinonfarbstoff der Formel

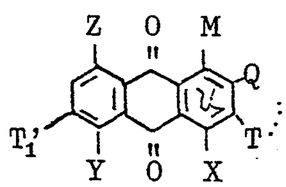

(II)

in der

M OH oder $NHR_1$ und

X, Y, Z, H, OH oder $NHR_1$ bezeichnen, wobei

$R_1$ für H, Alkyl, Cycloalkyl, Aryl oder Aralkyl stehen und die für $R_1$ genannten Kohlenwasserstoffreste substituiert sein können,

Q einen Aryl- oder heterocyclischen Rest oder einen

über ein O oder S-Atom mit Ring U verbundenen ali= phatischen, cycloaliphatischen, araliphatischen, Aryl- oder heterocyclischen Rest oder ein über ein O oder S-Atom mit Ring U verbundenes cycloaliphati= sches, Aryl-, oder heterocyclisches Ringsystem, wo= bei die genannten Reste und Ringsysteme substituiert sein können, oder eine Gruppe

$-L{=}A-R_2$, $-\underset{\overset{\|}{O}}{C}-G-R_2$ oder $-SO_2-(O)_n-R_6$

bezeichnet, wobei

A, L N oder CH

G $CH_2$, O oder $NR_1$ und

$R_2$ Alkyl, Cycloalkyl, Aralkyl, Aryl oder einen hetero= cyclischen Rest, wobei die für $R_2$ genannten Reste substituiert sein können und

$R_6$ einen aliphatischen, araliphatischen, cycloalipha= tischen, Aryl- oder heterocyclischen Rest oder ein cycloaliphatisches, Aryl- oder heterocyclisches Ringsystem, wobei die für $R_6$ genannten Reste und Ringsysteme substituiert sein können und

n 0 oder 1 bezeichnen;

T Wasserstoff oder Q bezeichnet;

T Q eine Gruppierung 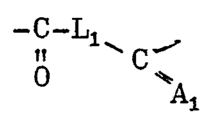

wobei

$L_1$ für O oder $NR_3$,

$R_3$ für einen aliphatischen, cycloaliphatischen oder araliphatischen Rest, wobei die für $R_3$ genannten Reste substituiert sein können und

$A_1$ für O oder NH stehen, bezeichnet und

$T_1'$ für Wasserstoff oder Q steht.

2. Farbstoffgemische gemäß Anspruch 1 enthaltend einen Azofarbstoff der Formel I, in der $R_1$ und $R_2$ verschieden

sind und einer dieser Reste für Benzyl, das durch Fluor, Chlor, Brom, $C_1$-$C_4$-Alkyl, Trifluormethyl, $C_1$-$C_4$-Alkoxy, Nitro, Cyan, Amino und gegebenenfalls durch $C_1$-$C_8$-Alkyl oder Phenyl mono- oder disubstituiertes Amino substitu= iert sein kann, steht.

3. Farbstoffgemische gemäß den Ansprüchen 1 und 2 ent= haltend einen Farbstoff der Formel

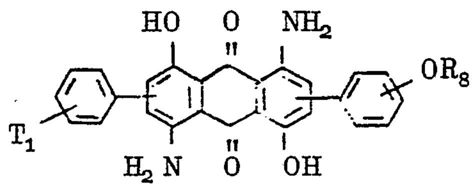

(III)

in der

$R_8$ Wasserstoff, Acyl einen aliphatischen, cycloalipha= tischen, araliphatischen, Aryl- oder heterocycli= schen Rest bezeichnet, wobei die für $R_8$ genannten Reste substituiert sein können und

$T_1$ H oder den Rest 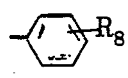 bedeutet.

4. Farbstoffgemische gemäß den Ansprüchen 1 und 2 ent= haltend einen Farbstoff der Formel

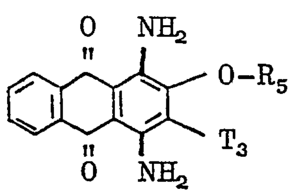

(IV)

in der

$R_5$ für einen Alkyl, Cycloalkyl, Aralkyl, Aryl oder ei= nen heterocyclischen Rest steht, wobei die genannten Reste substituiert sein können und

$T_3$ H oder $OR_5$ bezeichnet.

5. Farbstoffgemische gemäß den Ansprüchen 1 bis 4 ent= haltend einen Farbstoff der Formel

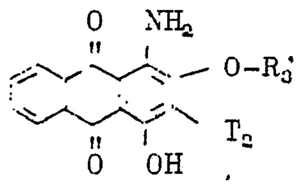

(V)

in der

$R_3'$ für einen aliphatischen, cycloaliphatischen, arali= phatischen Rest oder einen Arylrest steht, wobei diese Reste substituiert sein können,

$T_2$ Wasserstoff oder $OR_3'$ bezeichnet.

6. Farbstoffgemische enthaltend einen Farbstoff der For= mel

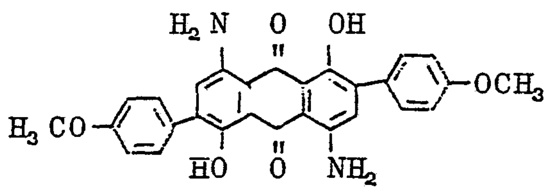

und einen Farbstoff der Formel

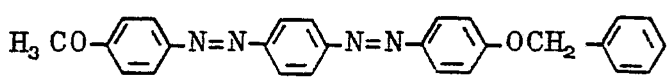

7. Schwarzmischungen gemäß Anspruch 1 enthaltend minde= stens einen gelben Farbstoff der Formel I und mindestens einen blauen und mindestens einen roten Farbstoff der Formel II.

8. Farbstoffgemische gemäß den Ansprüchen 1 bis 7 ent= haltend, bezogen auf das Gesamtgewicht an Azo- und Anthra= chinonfarbstoff, 0,05 bis 99 Gew.-%, bevorzugt 0,1 bis 50 Gew.-%, besonders bevorzugt 5-30 Gew.-% mindestens ei= nes Azofarbstoffs und 99,95 bis 1 Gew.-%, bevorzugt 99,9 bis 50 Gew.-%, besonders bevorzugt 95-70 Gew.-% minde= stens eines Anthrachinonfarbstoffs.

9. Flüssigkristallines Material enthaltend ein Farbstoff=

gemisch gemäß den Ansprüchen 1 bis 8.

10. Flüssigkristallines Material enthaltend etwa 0,01 bis etwa 30 Gew.-%, bevorzugt etwa 0,5 bis etwa 5 Gew.-% eines Farbstoffgemischs gemäß den Ansprüchen 1 bis 8.